# EUROPEAN PATENT APPLICATION

(11) **EP 0 969 454 A1**
(43) Date of publication of application: **05.01.2000**
(21) Application number: 98401670.9
(22) Date of filing: 03.07.1998
(51) Int. Cl.: G11B 7/09

(54) **Suspension device with direction dependent elastic force properties**

(71) Applicant: DEUTSCHE THOMSON-BRANDT GMBH, 30433 Hannover (DE)
(72) Inventor: Suzuki, Tsuneo, 92648 Boulogne (FR); Kaaden, Jürgen, 92648 Boulogne (FR); Braun, Günter, 92648 Boulogne (FR)
(74) Representative: Zhang, Jianguo

(57) **Abstract**

A suspension device used in an actuator to suspend an objective lens comprises four elastic members in form of elongated wires (9, 10, 17, 18) with an asymmetric shaped profile. The lens may be moved in radial and focus direction and the asymmetric shaped profiles are such that elastic force in radial (19) and in focus (20) direction are different.

## Description

The present invention relates to actuators in which a lens is movably mounted using elastic members. Such actuators may be found for example in optical disk players and / or recorders.

An actuator is an electro-mechanical or mechanical device for moving or controlling something. In optical disk players and / or recorders an optical head is used to direct a light beam on an optical or magneto-optical data carrier. The optical head typically comprises an objective lens which may be moved relative to a fixed base in at least two directions, e.g. a radial direction parallel to a surface of the data carrier and a focus direction substantially perpendicular to the surface of the data carrier. A movement of the objective lens is done by using an actuator. The objective lens may be suspended in the actuator using elastic members mounted on the base. The objective lens initially is in a rest position. The actuator further comprises for example a magnetic system to apply magnetic forces on the objective lens and move it in the radial and for focus direction away from the rest position. If the magnetic forces are removed, the objective lens returns to the rest position and remains there.

The elastic members impose elastic forces on the objective lens. These forces may be equal or different for the radial and focus direction.

It is known to use hinges as elastic members to suspend the objective lens in the actuator. The elastic forces generated by the hinges may be adjusted separately for the radial and focus direction by choosing appropriate material in an appropriate thickness for each direction. This way resonance frequencies may be adjusted to be different in radial and focus direction for a mechanical oscillator comprising the hinges and the objective lens. Hinges are relatively complex and expensive parts to manufacture.

An example using hinges may be seen in JP application with publication number 3-21972 which discloses an objective lens moving device comprising four electroconductive elastic members independent of each other to suspend the objective lens to a fixed base. The elastic members are made of plates which are folded such to function as hinges. The objective lens may be moved in radial and focus direction, which in this example are perpendicular. At least two out of the four support members are used to transport electrical energy from the fixed base to a proximity of the objective lens.

A less costly way to suspend the objective lens is known and involves using four elastic wires instead of the folded plates described above in JP 3-21972. The four wires each have one first end attached to the fixed base and an opposite second end attached to an objective lens carrier. The objective lens may be moved away from the rest position in either radial or focus direction and returns to the rest position in the absence of magnetic forces. The wires generate identical elastic forces in either radial or focus direction which makes the mechanical oscillator comprising the wires and the objective lens vulnerable to a same resonance frequency in radial and focus direction.

It is an object of the present invention to provide a solution for a suspension device which allows for different elastic forces in radial and focus direction while remaining cheap to manufacture.

A solution according to the present invention is found in a suspension device for use in a radial and / or focus direction lens positioning actuator of a data player and / or recorder, comprising four elastic members which on one first end are attached to a fixed base part of the actuator and on an opposite second end are attached to a lens carrier movable in respect to the base part, and wherein the elastic members are elongated wires having asymmetric shaped profiles.

Another solution according to the present invention is found in an optical or magneto-optical disk player and / or recorder in which an actuator used for positioning an objective lens in a radial and / or focus direction comprising a suspension device having four elastic member which on one first end are attached to a fixed base of the actuator and on an opposite second end are attached to a lens carrier movable in respect to the base part. The elastic members are elongated wires having asymmetric shaped profiles.

In the following examples will be described of ways to carry out the invention referring to drawings, wherein
Fig. 1 shows a side view of an actuator with elastic members according to the invention,
Fig. 2 shows an upper view of an actuator with elastic members according to the invention,
Fig. 3 shows a cross sectional view along line A,
Fig. 4 shows a cross sectional view along line A.

Throughout the following description same references will be used for designating same parts. It is understood that the described examples are given to illustrate the invention and are not limitative of the present invention. A person skilled in the art may well modify the described examples and remain in the scope of the claimed invention.

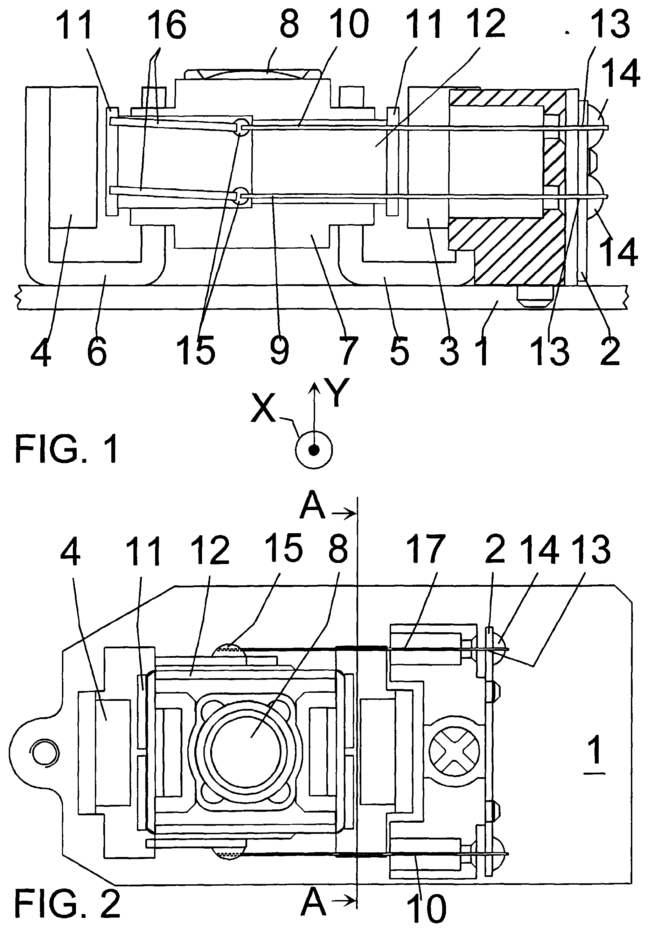

Fig. 1 shows an example of an actuator which may be found in an optical disk player and / or recorder. A fixed base made out of at least two plates 1 and 2 carries permanent magnets 3 and 4 on yokes 5 and 6. An objective lens assembly 7 comprises an objective lens 8, tracking coils 11 and focusing coils 12 which may be supplied with current and allow to move the objective lens assembly 7 in a radial direction X (perpendicular to the drawings) or focus direction Y as is well known by a person skilled in the art. The objective lens 8 is suspended to the plate 2 of the fixed base using four elastic members in form of elongated wires, two of which referenced 9 and 10 may be seen in Fig. 1. One first end of each elongated wire 9 and 10 is fitted through openings 13 of the plate 2 and soldered to the plate 2 in points 14. An opposite second end of each elongated wire 9 and 10 is fixed on the objective lens assembly 7 at locations 15 using for example soldering. The elongated wires 9 and 10 as well as the two other elongated wires not shown in Fig. 1 are parallel to each other such that during a movement in radial and / or focus direction the objective lens assembly 7 remains parallel to itself

Preferably the elongated wires 9 and 10 are conductive. The tracking coils 11 may be supplied with current over connections 16 between the tracking coils 11 and the elongated wires 9 and 10 by applying the current at the first ends, i.e., at the soldering points 14.

Fig. 2 shows and upper view of the actuator in which one elongated wire 17 of the two other elongated wires may be seen. As mentioned above the elongated wires 17 and 10 are parallel to each other.

All four elongated wires including 9, 10 and 17 have an asymmetric shaped profile which gives them different elastic properties for elastic bending in radial and in focus direction. Preferably the openings 13 are precisely adapted to the asymmetric shaped profiles in a way such that at manufacturing of the actuator the elongated wires may be inserted into the openings 13 and their asymmetric profile geometrically oriented before soldering.

In an embodiment not shown in the Fig. 2 the plate 2 may be adapted to accept screws such to clamp the elongated wires in the openings 13.

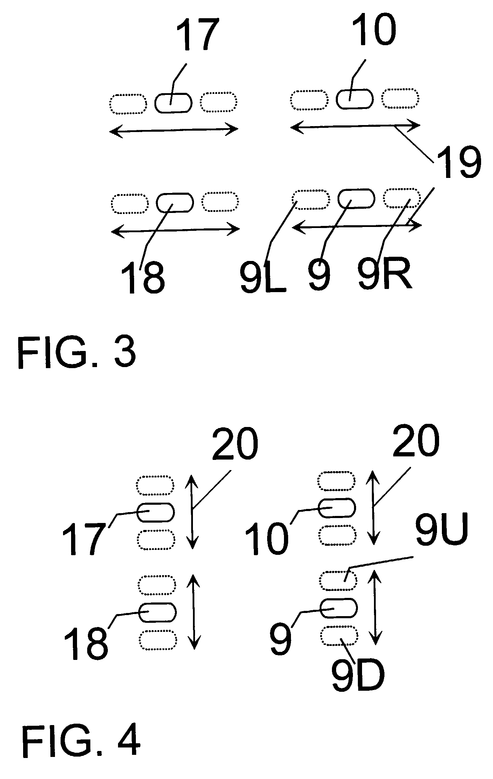

Fig. 3 shows a cross sectional view of the elongated wires 9, 10, 17 and the fourth elongated wire 18 along a line A drawn in Fig. 2. The cross sectional view illustrates an example of an asymmetric shaped profile of the elongated wires 9, 10, 17 and 18 which is a rectangle with rounded short sides. This kind of asymmetric shaped profile may be obtained for example by squashing wire having a symmetric circular cross sectional profile (not shown). In this case, a material making up the elongated wires may besides being elastic also be permanently deformable for a squashing process. Such a material may for example be a metal.

Double arrows 19 indicate the radial direction of movement in which the elongated wires may be bent. The asymmetric profiles referenced 9, 10, 17 and 18 and represented with continuous lines show a rest position when no magnetic force act on the objective lens assembly 7. Profiles referenced 9L and 9R and represented in dotted lines show positions away from the rest position which may be adopted when magnetic forces in radial direction apply to the objective lens assembly 7. In a similar manner positions away from the rest position are represented for the elongated wires 10, 17 and 18 using dotted lines.

Fig. 3 shows that the asymmetric shaped profiles of all four elongated wires 9, 10, 17 and 18 are in an identical orientation, i.e., long sides of the rectangles are parallel to each other between two wires. In this way each elongated wire 9, 10, 17 and 18 generates a same elastic force each in radial direction. Due to a precision of a manufacturing process fo the actuator, it may happen that the asymmetric shaped profiles are not strictly identically oriented for all four elongated wires 9, 10, 17 and 18.

Fig. 4 shows a cross sectional view of the elongated wires 9, 10, 17 and 18 along a line A drawn in Fig. 2. The asymmetric shaped profile is the same as the one shown in Fig. 3.

Double arrows 20 indicate the focus direction of movement in which the elongated wires may be bent. The asymmetric profiles referenced 9, 10, 17 and 18 and represented with continuous lines show a rest position when no magnetic force acts on the objective lens assembly 7. Profiles referenced 9D and 9U and represented in dotted lines show positions away from the rest position which may be adopted when magnetic forces in focus direction apply to the objective lens assembly 7. In a similar manner positions away from the rest position are represented for the elongated wires 10, 17 and 18 using dotted lines. The asymmetric profiles of all four elongated wires 9, 10, 17 and 18 are in an identical orientation such that they generate a same elastic force each in focus direction.

For the present example and as compared to Fig. 3 the elastic force generated in focus direction will for a same angle of bending (not shown) be smaller than an elastic force generated in radial direction. The elastic forces generated in either radial or focus direction may be influenced each by using determined asymmetric shaped profiles for the elongated wires. For example a radial elastic force may be increased by increasing a length of the long side of the rectangle or by using a material which is stiffer for bending in the radial direction.

## Claims

1. Suspension device for use in a radial (X) and / or focus (Y) lens positioning actuator of a data player and / or recorder comprising four elastic members which on one first end are attached to a fixed base part (2, 13, 14) of the actuator and on an opposite second end are attached to a lens carrier (7) movable in respect to the base part, characterized in that the elastic members are elongated wires (9, 10, 17, 18) having asymmetric shaped profiles.

2. Suspension device according to claim 1, characterized in that the wires have identical asymmetric shaped profiles, and the wires are located parallel to one another such that an orientation of the asymmetric shaped profiles is substantially identical for each wire.

3. Suspension device according to either one of claims 1 or 2, characterized in that the elongated wires have different radial and focus elastic properties for radial and focus lens positioning.

4. Suspension device according to either one of claims 1 to 3, characterized in that the fixed base part comprises at least a clamp to mechanically clamp the first ends.

5. Suspension device according to either one of claims 1 to 4; characterized in that the first end is soldered to the fixed base part.

6. Suspension device according to either one of claims 1 to 5, characterized in that the elongated wires are electrically conductive.

7. Optical or magneto-optical disk player and / or recorder in which an actuator used for positioning an objective lens (8) in a radial (X ; 19) and / or focus (Y ; 20) direction comprises a suspension device having four elastic member which on one first end are attached to a fixed base of the actuator and on an opposite second end are attached to a lens carrier (7) movable in respect to the base part, characterized in that the elastic members are elongated wires (9, 10, 17, 18) having asymmetric shaped profiles.
